# EUROPÄISCHE PATENTSCHRIFT

(11) **EP 3 019 842 B1**
(45) Veröffentlichungstag und Bekanntmachung des Hinweises auf die Patenterteilung: **12.09.2018**
(21) Anmeldenummer: 14728453.3
(22) Anmeldetag: 04.06.2014
(51) Int. Cl.: G01L 1/08, G01G 3/13, G01G 7/00

(54) **PIEZOELEKTRISCHE KRAFTMESSVORRICHTUNG**
PIEZOELECTRIC FORCE MEASUREMENT DEVICE
DISPOSITIF DYNAMOMÉTRIQUE PIÉZOÉLECTRIQUE

(30) Priorität: 09.07.2013 DE 102013107210
(43) Veröffentlichungstag der Anmeldung: 18.05.2016
(73) Patentinhaber: Sartorius Lab Instruments GmbH & Co. KG, 37079 Göttingen (DE)
(72) Erfinder: EGER, Matthias, 37434 Wollbrandshausen (DE); MÜLLER, Michael, 37079 Göttingen (DE)
(74) Vertreter: Schneider, Peter Christian
(86) Internationale Anmeldenummer: PCT/EP2014/001509
(87) Internationale Veröffentlichungsnummer: WO 2015/003764

(56) Entgegenhaltungen:
- EP-A1- 2 073 343
- EP-A2- 2 199 769
- DE-A1- 10 008 752
- DE-A1-102010 030 652
- DE-B3-102011 076 006
- DE-U1- 29 909 843
- JP-A- H09 325 080
- JP-A- 2013 044 711

## Beschreibung

### Gebiet der Erfindung

Die Erfindung betrifft eine Kraftmessvorrichtung, umfassend
- einen an einer festen Basis abgestützten Verformungskörper, welcher sich ohne äußere Krafteinwirkung in einer Nulllage befindet und welcher durch eine äußere Krafteinwirkung auslenkbar ist, und
- einen Sensor, mittels dessen ein von der Verformung des Verformungskörper abhängiges Signal erzeugbar und an eine Steuereinrichtung übermittelbar ist, und
- einen Aktor, welcher ein Piezoelement umfasst und der in Abhängigkeit von dem Sensorsignal durch die Steuereinrichtung so ansteuerbar ist, dass dadurch eine Rückstellkraft entgegen der äußeren Krafteinwirkung auf den Verformungskörper, welcher dadurch in seine Nulllage zurücküberführbar ist, ausübbar ist,
wobei eine für die äußere Krafteinwirkung repräsentative Messgröße mittels der Steuereinrichtung ermittelbar ist.

### Stand der Technik

Eine derartige Kraftmessvorrichtung ist bekannt aus der JP 00H09-325080 A. Allgemein wird bei einer solchen Kraftmessvorrichtung durch eine äußere Krafteinwirkung deren Verformungskörper deformiert und ein Sensor erzeugt ein von der Deformation des Verformungskörper abhängiges Signal, welches von einer Steuereinrichtung gemessen wird. In der aus der JP 00H09-325080 A bekannten Kraftmessvorrichtung kommt als Sensor ein Licht-Sensor zum Einsatz, der die Verformung des Verformungskörpers relativ zur Basis, an der der Verformungskörper abgestützt ist, ermittelt. Auf Basis des Sensorsignals steuert eine Steuereinrichtung einen piezoelektrischen Aktor so an, dass der Verformung des Verformungskörpers durch eine entgegen der äußeren Krafteinwirkung ausgeübte Rückstellkraft entgegengewirkt wird. Hierdurch befindet sich der Verformungskörper trotz äußerer Krafteinwirkung in seiner Nulllage. In der bekannten Kraftmessvorrichtung wird die für die äußere Krafteinwirkung repräsentative Messgröße aus der Spannung bestimmt, die zur Rückstellung des Verformungskörpers in die Nulllage mittels des Aktors erforderlich ist. Für Präzisionsmessungen ist diese Vorrichtung jedoch nur bedingt tauglich. Durch die Natur des Sensors als optischer Sensor bedingt dessen Betrieb einen unerwünschten Wärmeeintrag, der Messfehler erzeugen kann. Zudem hat sich die räumlich zueinander versetzte Anordnung von Aktor und Sensor, die auf völlig unterschiedlichen physikalischen Prinzipien basieren, als einer präzisen Messung abträglich erwiesen.

Die für die äußere Krafteinwirkung repräsentative Messgröße kann anstatt anhand des Aktorsignals auch aus dem Sensorsignal bestimmt werden. Beispielsweise ist aus der EP 0 164 839 A2 eine Kraftmessvorrichtung bekannt, bei der die äußere Krafteinwirkung mittels mehrerer Sensoren, welche als Dehnmessstreifen ausgeführt ist, gemessen wird. Nachteilig bei dieser Kraftmessvorrichtung ist, dass die Verformung des Verformungskörpers nicht kompensiert wird. Die Folge ist eine verschlechterte Messgenauigkeit der äußeren Krafteinwirkung, die zudem abhängig von dem Betrag des zu messenden Gewichts ist. Hierdurch wird der Verformungskörper bei einer großen Krafteinwirkung stärker verformt als bei einer geringen Krafteinwirkung. Dies führt zu einer größeren Abweichung von dem linearen Zusammenhang zwischen dem Betrag der äußeren Krafteinwirkung und der Verformung des Verformungskörpers und somit zu einer größeren Messungenauigkeit. Eine weitere Folge einer solchen Verformung sind Kriecheffekte .

Eine Kraftmessvorrichtung, die vollkommen ohne einen piezoelektrischen Aktor oder Sensor auskommt, da sie auf dem Prinzip der elektromagnetischen Kraftkompensation basiert, ist beispielsweise aus der DE 299 09 843 U1 bekannt.

Aus der JP 002013-044711 A ist eine Kraftmessvorrichtung bekannt, bei der ein piezoelektrischer Aktor mit einem Verformungskörper verbunden ist. Bei dieser Kraftmessvorrichtung wird eine an dem Verformungskörper angreifende äußere Kraft mittels einer Positionsermittlung des Verbindungspunktes von Aktor und Verformungskörper bestimmt. Hierbei wird die Position des Punktes, an dem die äußere Kraft an den Verformungskörper angreift, vom Aktor stets konstant gehalten. Die Bestimmung der Positionen der relevanten Punkte erfolgt dabei kontaktlos durch geeignete Sensorsysteme.

Weiter ist aus der DE 10 2011 076 006 B3 eine Kraftmessvorrichtung bekannt, deren Sensor aus zwei getrennten Sensorteilen besteht, die an unterschiedlichen Positionen innerhalb eines durch eine äußere Kraft verformbaren Verformungskörpers angeordnet sind. Hierbei basiert das vom Sensor erzeugte Sensorsignal auf den Relativpositionen, die die beiden Sensorteile zueinander einnehmen. Bei einer durch die Verformung des Verformungskörpers ausgelösten Änderung der Relativpositionen der Sensorteile steuert eine Steuereinrichtung auf Basis des resultierenden Sensorsignals einen mit einem der beiden Sensorteile verbundenen piezoelektrischen Aktor so an, dass der Relativpositionsänderung der Sensorteile wieder entgegengewirkt wird. Hierdurch arbeitet der Sensor unabhängig von einer auf den Verformungskörper ausgeübten Last und der daraus resultierenden Verformung des Verformungskörpers im linearen Bereich. Die lastabhängige Verformung des Verformungskörpers an sich wird durch den piezoelektrischen Aktor dabei allerdings nicht korrigiert.

Aus der DE 100 08 752 A1 ist ein piezoelektrischer Aktor bekannt, der auch gleichzeitig als piezoelektrischer Sensor eingesetzt werden kann. Hierzu wird dem Aktor eine Hilfsanregungsspannung aufgeschaltet, deren von der mechanischen Belastung des Aktors abhängiges Antwort-Signal entkoppelt von der Aktorspannung als Messsignal ausgewertet wird.

### Aufgabenstellung

Es ist die Aufgabe der vorliegenden Erfindung, eine Kraftmessvorrichtung derart weiterzubilden, dass eine verbesserte Regelbarkeit und Reduktion von Messfehlern erreicht wird.

### Darlegung der Erfindung

Diese Aufgabe wird in Verbindung mit den Merkmalen des Oberbegriffs von Anspruch 1 dadurch gelöst, dass der als ein Piezoelement ausgebildete Sensor und der Aktor eine aktive Baugruppe bilden und in Richtung der Krafteinwirkung auf Sensor und Aktor geschichtet zueinander angeordnet sind.

Bevorzugte Ausführungsformen sind Gegenstand der abhängigen Ansprüche.

Die o.g. Aufgabe wird also zunächst dadurch gelöst, dass anstelle des aus dem Stand der Technik bekannten aktiven Licht-Sensors ein Piezoelement als passiver Sensor zur Ermittlung der Verformung des Verformungskörpers eingesetzt wird. Diese Maßnahme wird durch die Integration von Sensor und Aktor in einer gemeinsamen Baugruppe und zusätzlich durch deren spezielle Ausgestaltung und Ausrichtung, nämlich als Schichtung von Aktor und Sensor in Krafteinleitungsrichtung ergänzt. Der Austausch des Sensorprinzips reduziert zum einen den schädlichen Wärmeeintrag und ermöglicht zum anderen die Schichtung von Sensor und Aktor, wodurch der Angriffspunkt der Aktorkraft auf den Verformungskörper identisch wird mit dem Angriffspunkt derjenigen Kraft, die der Verformungskörper bei äußerer Krafteinwirkung auf den Sensor ausübt. Hierdurch kann der Verformung des Verformungskörpers optimal mittels des Aktors entgegengewirkt werden.

Wie schon aus dem Stand der Technik bekannt wird auch bei der erfindungsgemäßen Kraftmessvorrichtung die durch die äußere Krafteinwirkung erlangte Verformung des Verformungskörpers mittels eines Aktors so aufgehoben wird, dass sich der Verformungskörper trotz äußerer Krafteinwirkung in seiner Nulllage befindet. Hierdurch wird die Unsicherheit bei der Bestimmung der äußeren Krafteinwirkung reduziert und ist unabhängig von dem Betrag der einwirkenden Kraft, was bei einer Kraftmessvorrichtung ohne Rückführung des Verformungskörpers nicht der Fall ist. Durch die erfindungsgemäße Kraftmessvorrichtung können die durch die Verformung des Verformungskörpers bedingten Nicht-Linearitäten zwischen der repräsentativen Messgröße und der äußeren Krafteinwirkung beseitigt werden. Somit wird zusätzlich die Komplexität des Zusammenhangs von repräsentativer Messgröße und äußerer Krafteinwirkung reduziert, was wiederum den Fehler bei der Bestimmung der äußeren Krafteinwirkung aus der Messgröße verringert.

Weiter wird, wie bereits erläutert, die auf den Verformungskörper wirkende äußere Krafteinwirkung auf das Sensor-Piezoelement übertragen. Die resultierende Verformung des Sensor-Piezoelements erzeugt eine Spannung, welche von der äußeren Krafteinwirkung abhängig ist. Diese Spannung kann als Sensorsignal am Piezoelement abgegriffen und an die Steuereinrichtung übermittelt werden. In ähnlicher Weise wird ein Aktor-Piezoelement mittels Stromansteuerung verformt und kann dadurch eine Kraft auf den Verformungskörper ausüben, die der äußeren Krafteinwirkung entgegenwirkt. Dadurch, dass Aktor und Sensor als Piezoelement auf demselben physikalischen Prinzip basieren, reagieren sie gleich auf äußere Einflüsse wie z.B. Temperaturschwankungen, was mögliche Unsicherheiten in einem Messvorgang reduziert. Ein weiterer Vorteil ist, dass das Sensorsignal eines Piezoelementes leichter in das Aktorsignal eines Piezoelementes umgesetzt werden kann, was die Programmierung der Steuereinrichtung vereinfacht. Als Piezoelement ist der Sensor weiterhin in der Lage, Verformungen im Submikrometer-Bereich zu detektieren. In gleicher Weise kann ein als Piezoelement ausgebildeter Aktor der Verformung im Submikrometer-Bereich entgegenwirken.

Die erfindungsgemäße Kraftmessvorrichtung kann als Wägeanwendung verwendet werden. Hierbei ist die Ursache der äußeren Krafteinwirkung die Gewichtskraft eines zu messenden Objekts. Dann ist die erfindungsgemäße Kraftmessvorrichtung besonders vorteilhaft, wenn das Gewicht eines Stoffes mittels einer Waageschale gemessen werden soll. Die durch die Waageschale bedingte Verformung des Verformungskörpers wird vollständig aufgehoben und beeinflusst daher die anschließend beabsichtigte Gewichtskraftmessung des Stoffes in keiner Weise.

Ein Merkmal einer bevorzugten Ausführungsform ist, dass der Aktor und Sensor, d. h. die aktive Baugruppe, über eine Hebelstruktur an den Verformungskörper gekoppelt sind. Dies führt zu einer Kraftübersetzung, sodass die am Sensor gemessenen Kräfte und die am Aktor agierenden Kräfte je nach Ausgestaltung geringer oder größer sind als die äußere Krafteinwirkung. Z.B. kann eine kleine Auslenkung des Verformungskörpers in eine große Auslenkung des Hebels der Hebelstruktur übersetzt werden, die von dem Sensor genauer erfasst wird und somit zu einer Verbesserung der Auflösung führt.

Weiterhin ermöglicht eine solche Hebelstruktur, wenn der Verformungskörper auf seinem Schwerpunkt auf der Hebelstruktur gelagert ist, die Entkopplung eines Kippmoments des Verformungskörpers von der Messung der äußeren Krafteinwirkung.

In einer bevorzugten Ausführungsform der Kraftmessvorrichtung bilden Sensor und Aktor eine aktive Baugruppe und sind in Richtung der auf sie wirkenden Kraft geschichtet angeordnet. Durch eine solche Positionierung ist der Angriffspunkt der Aktorkraft auf den Verformungskörper identisch mit dem Angriffspunkt der Kraft, die der Verformungskörper bei äußerer Krafteinwirkung auf den Sensor ausübt. Hierdurch kann der Verformung des Verformungskörpers optimal mittels des Aktors entgegengewirkt werden.

In einer weiteren bevorzugten Ausführungsform sind der Aktor, der Sensor und die Steuereinrichtung so miteinander verschaltet, dass die Steuereinrichtung den Aktor mittels eines aus dem Sensorsignal anhand von kalibrierten Tabellen und/oder mathematischen Regeln ermittelten Aktorsignals ansteuert. Mit anderen Worten, der Verformungskörper wird in seine Nulllage zurückgeführt, ohne dass eine Überprüfung der Nulllage des Verformungskörpers nötig ist. Dies reduziert die Komplexität der Aufgaben der Steuereinrichtung und führt damit zu einer verminderten Fehleranfälligkeit der Kompensation der äußeren Krafteinwirkung.

Ein weiteres bevorzugtes Merkmal ist, dass das Sensorsignal eine für die äußere Krafteinwirkung repräsentative Messgröße ist. Grundsätzlich kann jedoch auch das Aktorsignal als repräsentative Messgröße dienen. Durch die bevorzugte Ausgestaltung jedoch werden Unsicherheiten der Messgröße der äußeren Krafteinwirkung vermieden, die durch Transformation des Sensorsignals in das Aktorsignal entstanden wären.

In einer günstigen Ausführungsform ist das Piezoelement des Aktors und/oder des Sensors jeweils mehrschichtig ausgebildet. Hier besteht der Aktor und/oder der Sensor aus in einem Stapel, übereinander angeordneten Piezoschichten. Durch die parallele Ansteuerung der einzelnen Piezoschichten eines solchen Stapels, kann einerseits eine vergrößerte Ausdehnung des Aktors im Vergleich zu einem Aktor mit nur einer Piezoschicht erlangt werden. Somit kann einer größeren Verformung des Verformungskörpers und damit einhergehend einer größeren äußeren Krafteinwirkung entgegengewirkt werden. In ähnlicher Weise kann eine größere Verformung des Verformungskörpers mittels einer parallelen Ansteuerung eines mehrschichtigen Sensors gemessen werden. Natürlich ist auch ein einschichtiges Piezoelement als Aktor und/oder Sensor denkbar.

Ein Merkmal einer weiteren bevorzugten Ausführungsform der erfindungsgemäßen Kraftmessvorrichtung ist, dass der Verformungskörper ein Biegebalken ist. Hierbei ist das eine Ende des Biegebalkens fixiert und damit nicht auslenkbar und das andere Ende ist frei und damit auslenkbar. Eine auf das freie Ende gerichtete, äußere Krafteinwirkung führt somit zu einer Auslenkung des Biegebalkens, die von dem Sensor messbar ist. Vorteilhaft bei einer solchen Ausführungsform ist, dass durch die einseitige Fixierung des Verformungskörpers das mögliche Kippmoment des Verformungskörpers um eine Richtung reduziert wird. Hierdurch konzentriert sich die Richtung der äußeren Krafteinwirkung im Wesentlichen auf die Auslenkung des Biegebalkens. Dadurch ist die Verformungsrichtung eines solchen Verformungskörpers durch den Körper vorgegeben und damit vorhersagbar. Eine Folge ist, dass das Aktor-Sensor-System entsprechend der erwarteten Verformungsrichtung an den Verformungskörper angeordnet werden kann, so dass die Krafteinwirkung zwischen Körper und Aktor-Sensor-System optimal ist. Eine besonders bevorzugte Variante liegt vor, wenn die Vorteile des Verformungskörpers als Biegebalken und der Kraftübersetzung der Hebelstruktur kombiniert werden.

Ein weiteres bevorzugtes Merkmal einer Ausführungsform ist, dass der Verformungskörper über eine zu der aktiven Baugruppe baugleiche und parallel zu dieser ausgerichtete passive Baugruppe and der Basis abgestützt ist. Als passive Baugruppe ist dabei eine Einheit zu verstehen, die zwar aufgrund ihres identischen Aufbaus ebenso wie die aktive Baugruppe als Sensor-/Aktor-Einheit verwendbar wäre, jedoch nicht als solche angesteuert ist. Die Piezoelemente der passiven Baugruppe sind parallel zu der Richtung geschichtet zueinander angeordnet, in der die Piezoelemente der aktiven Baugruppe geschichtet zueinander angeordnet sind. Die passive Baugruppe fungiert somit als Stützkörper des Verformungskörpers. Dadurch liegt der Verformungskörper auf baugleichen Körpern, dem Stützkörper und dem Aktor-Sensor-System, auf, welche aufgrund äußerer thermischer Einflüsse gleich reagieren. Somit werden aufgrund von Temperaturschwankungen auftretende Fehler verringert.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht einer Ausführungsform einer piezoelektrischen Kraftmessvorrichtung ohne äußere Krafteinwirkung,
- Figur 2:: eine Seitenansicht einer Ausführungsform einer piezoelektrischen Kraftmessvorrichtung mit äußerer Krafteinwirkung, wobei sich der Biegebalken in seiner Nulllage befindet,
- Figur 3:: eine Seitenansicht einer Ausführungsform einer piezoelektrischen Kraftmessvorrichtung mit Hebelstruktur,
- Figur 4:: eine Seitenansicht einer Ausführungsform einer piezoelektrischen Kraftmessvorrichtung mit einer passiven Baugruppe.

### Beschreibung bevorzugter Ausführungsformen

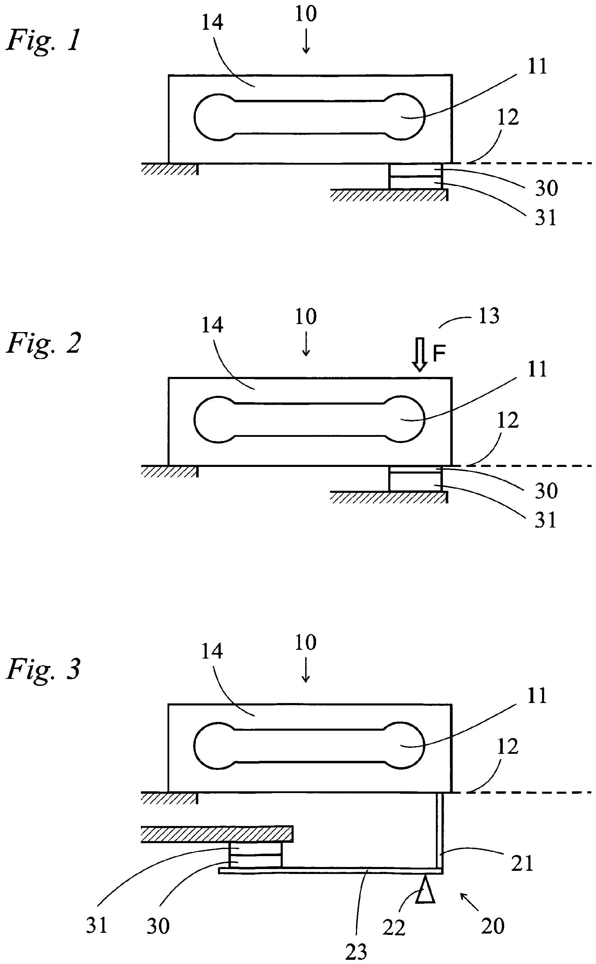

Figur 1 zeigt eine Seitenansicht einer Ausführungsform einer piezoelektrischen Kraftmessvorrichtung, bei der ein Körper 14 mittels einer Aussparung 11 als Biegebalken 10 ausgeführt ist. Der Biegebalken 10 ist an seinem einen Ende fixiert und an seinem anderen Ende lose und damit auslenkbar und befindet sich im Zustand ohne äußerer Krafteinwirkung 13 in seiner Nulllage 12. Unterhalb des losen Endes des Biegebalkens 10 ist ein piezoelektrischer Sensor 30 angeordnet, welcher sich in seiner Nulllage befindet. Weiterhin befindet sich ein Aktor 31 unterhalb des Sensors, welcher sich ebenfalls ohne äußere Krafteinwirkung 13 in seiner Nulllage befindet. Idealerweise stützt sich der Aktor an seiner unteren Seite gegen eine feste Basis ab, sodass die von ihm ausgehende Aktorkraft nur nach oben, entgegengesetzt der äußeren Krafteinwirkung 13 wirkt. Somit richtet sich die volle Aktorkraft entgegen der durch die äußere Krafteinwirkung verursachten Auslenkung des Biegebalkens 10.

Eine wie in Fig. 2 gezeigte Verformung des Sensors 30 durch die Auslenkung des Biegebalkens 10 führt zu einer am Sensor messbaren Spannung, welche von einer Steuereinrichtung (nicht eingezeichnet) gemessen werden kann. Das hiermit ermittelte Sensorsignal wird von der Steuereinrichtung in ein Aktorsignal transformiert, welches als Strom an den Aktor 31 übermittelt wird. Durch ein solches Signal kann der Aktor 31 als piezoelektrisches Element so deformiert werden, dass er sich entgegen der Auslenkung des Biegebalkens 10 verformt und somit der äußeren Krafteinwirkung 13 entgegenwirkt. Das in diesem Ausführungsbeispiel dargestellte Aktor-Sensor-System besteht aus genau einem Aktor und genau einem Sensor. Selbstverständlich kann es auch durch eine beliebige Anzahl von Aktoren und Sensoren ersetzt werden. Des Weiteren ist es auch möglich, die Anordnung von Aktor 31 und Sensor 30 zu vertauschen.

Figur 2 zeigt eine Seitenansicht einer Ausführungsform einer piezoelektrischen Kraftmessvorrichtung mit äußerer Krafteinwirkung 13. Sobald eine Kraft auf den Sensor wirkt, wird ein zu der Krafteinwirkung abhängiges Sensorsignal von der Steuereinrichtung gemessen und als Aktorsignal an den Aktor 31 übermittelt. Der Aktor wirkt der Deformation des Sensors 30 sofort entgegen, sodass damit auch der Auslenkung des Biegebalkens 10 sofort entgegen gewirkt werden kann. Somit wird der Biegebalken 10 quasi nicht aus seiner Nulllage 12 ausgelenkt. Im Zustand des Kräfteausgleichs zwischen äußerer Krafteinwirkung 13 und dem Aktor-Sensor-System ist der Sensor 30 komprimiert, wohingegen der Aktor 31 expandiert ist.

Figur 3 zeigt eine Seitenansicht einer Ausführungsform einer piezoelektrischen Kraftmessvorrichtung, bei der das Aktor-Sensor-System über eine Hebelstruktur 20 an den Biegebalken 10 gekoppelt ist. Bei dieser Ausführungsform wird die Auslenkung des Biegebalkens 10 aus seiner Nulllage 12 über ein Koppelelement und eine Stützstruktur 22 einer Hebelstruktur 20 auf einen Hebelarm 23 der Hebelstruktur 20 übertragen. Eine kleine Auslenkung des Biegebalkens führt somit zu einer großen Auslenkung des Hebelarms 23 der Hebelstruktur 20. Dies führt zu einer entsprechend größeren Deformation des Sensors 30 im Vergleich zu einer Deformation des Sensors 30 ohne Hebelstruktur 20. Im gleichen Sinne ist die Krafteinwirkung des Aktors 31 auf die Auslenkung des Biegebalkens 10 durch den Hebelarm 23 der Hebelstruktur 20 effektiver.

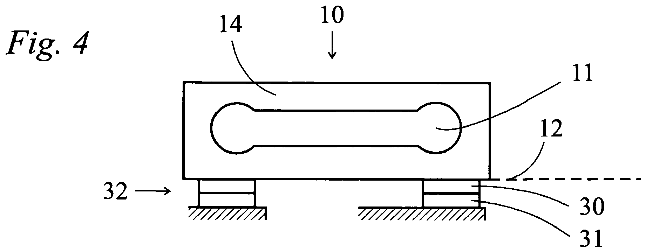

Figur 4 zeigt eine Seitenansicht einer Ausführungsform einer piezoelektrischen Kraftmessvorrichtung, bei der ein Stützkörper für den Verformungskörper 10, über den sich dieser an die Basis abstützt, durch eine dem Aktor-Sensor-System baugleiche aber passive Baugruppe 32 realisiert ist. Hierdurch wirken sich äußere Einflüsse aufgrund von Temperaturschwankungen, z.B. die thermisch bedingte Ausdehnung eines Körpers, gleich auf Stützkörper und Aktor-Sensor-System aus.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10: Verformungskörper
- 11: Aussparung
- 12: Nulllage des Biegebalkens
- 13: äußere Krafteinwirkung
- 14: Körper
- 20: Hebelstruktur
- 21: Koppelelement
- 22: Stützpunkt
- 23: Hebelarm
- 30: Sensor
- 31: Aktor
- 32: passive Baugruppe

## Patentansprüche

1. Kraftmessvorrichtung, umfassend
- einen an einer festen Basis abgestützten Verformungskörper (10), welcher sich ohne äußere Krafteinwirkung (13) in einer Nulllage (12) befindet und welcher durch eine äußere Krafteinwirkung (13) auslenkbar ist, und
- einen Sensor (30), mittels dessen ein von der Verformung des Verformungskörper (10) abhängiges Signal erzeugbar und an eine Steuereinrichtung übermittelbar ist, und
- einen Aktor (31), welcher ein Piezoelement umfasst und der in Abhängigkeit von dem Sensorsignal durch die Steuereinrichtung so ansteuerbar ist, dass dadurch eine Rückstellkraft entgegen der äußeren Krafteinwirkung (13) auf den Verformungskörper (10), welcher dadurch in seine Nulllage (12) zurücküberführbar ist, ausübbar ist,
wobei eine für die äußere Krafteinwirkung (13) repräsentative Messgröße mittels der Steuereinrichtung ermittelbar ist,
**dadurch gekennzeichnet,**
**dass** der als ein Piezoelement ausgebildete Sensor (30) und der Aktor (31) eine aktive Baugruppe bilden und in Richtung der Krafteinwirkung auf Sensor (30) und Aktor (31) geschichtet zueinander angeordnet sind.

2. Kraftmessvorrichtung nach Anspruch 1,
**dadurch gekennzeichnet,**
**dass** der Sensor (30) und der Aktor (31) über eine Hebelstruktur (20) an den Verformungskörper (10) gekoppelt sind.

3. Kraftmessvorrichtung nach einem der vorangehenden Ansprüche,
**dadurch gekennzeichnet,**
**dass** der Aktor (31), der Sensor (30) und die Steuereinrichtung so miteinander verschaltet sind, dass die Steuereinrichtung den Aktor (31) mittels eines aus dem Sensorsignal anhand von kalibrierten Tabellen und/oder mathematischen Regeln ermittelten Aktorsignals ansteuert.

4. Kraftmessvorrichtung nach Anspruch 3,
**dadurch gekennzeichnet,**
**dass** das Sensorsignal die für die äußere Krafteinwirkung (13) repräsentative Messgröße ist.

5. Kraftmessvorrichtung nach einem der vorangehenden Ansprüche,
**dadurch gekennzeichnet,**
**dass** das Piezoelement des Aktors (31) und/oder des Sensors (30) jeweils mehrschichtig ausgebildet ist.

6. Kraftmessvorrichtung nach einem der vorangehenden Ansprüche,
**dadurch gekennzeichnet,**
**dass** der Verformungskörper ein Biegebalken (10) ist.

7. Kraftmessvorrichtung nach einem der vorangehenden Ansprüche,
**dadurch gekennzeichnet,**
**dass** der Verformungskörper über eine mit der aktiven Baugruppe baugleiche und parallel zu dieser ausgerichtete, als Stützkörper des Verformungskörpers fungierende, passive Baugruppe (32) an der festen Basis abgestützt ist.

## Claims

1. Force measuring device comprising:
- a deformation body (10), which is supported on a fixed base and which is disposed in a zero position (12) in the absence of external force action (13) and is deflectable by external force action (13),
- a sensor (30) by means of which a signal dependent on the deformation of the deformation body (10) can be generated and can be transmitted to a control device and
- an actuator (31) which comprises a piezo element and which can be so activated by the control device in dependence on the sensor signal that a restoring force opposing the external force action (13) can be exerted on the deformation body (10), which is thereby transferrable back to its zero position (12),
wherein a measurement variable representative of the external force action (13) can be determined by means of the control device,
**characterised in that**
the sensor (30) constructed as a piezo element and the actuator (31) form an active subassembly and are arranged to be layered relative to one another in the direction of the force action on the sensor (30) and actuator (31).

2. Force measuring device according to claim 1, **characterised in that** the sensor (30) and the actuator (31) are coupled to the deformation body (10) by way of a lever structure (20).

3. Force measuring device according to one of the preceding claims, **characterised in that** the actuator (31), the sensor (30) and the control device are so connected together that the control device controls the actuator (31) by means of an actuator signal determined from the sensor signal by way of calibrated tables and/or mathematical rules.

4. Force measuring device according to claim 3, **characterised in that** the sensor signal is the measurement variable representative of the external force action (13).

5. Force measuring device according to any one of the preceding claims, **characterised in that** the piezo element of the actuator (31) and/or of the sensor (30) is of respective multi-layered construction.

6. Force measuring device according to any one of the preceding claims, **characterised in that** the deformation body is a bending beam (10).

7. Force measuring device according to any one of the preceding claims, **characterised in that** the deformation body is supported on the fixed base by way of a passive subassembly (32) which is constructionally identical with the active subassembly and oriented parallel thereto and which functions as a support body of the deformation body.

## Revendications

1. Dispositif dynamométrique, comprenant
- un corps déformable (10) en appui sur une base fixe, lequel se trouve en position neutre (12) sans l'action d'une force extérieure (13) et peut être fléchi sous l'action d'une force extérieure (13), et
- un capteur (30), au moyen duquel un signal dépendant de la déformation du corps déformable (10) peut être généré et être transmis à un dispositif de commande, et
- un actionneur (31) comprenant un élément piézoélectrique et pouvant être commandé par le dispositif de commande en fonction du signal de capteur, de manière à permettre qu'une force de rappel soit exercée contre l'action de la force extérieure (13) sur le corps déformable (10) qui peut ainsi être ramené vers sa position neutre (12),
une grandeur de mesure représentative pour l'action de la force extérieure (13) étant déterminable au moyen du dispositif de commande,
**caractérisé en ce que**
le capteur (30) réalisé comme élément piézoélectrique et l'actionneur (31) forment un groupe de composants actif, et sont disposés en étant superposés l'un à l'autre dans la direction de l'action de la force sur le capteur (30) et l'actionneur (31).

2. Dispositif dynamométrique selon la revendication 1,
**caractérisé en ce que**
le capteur (30) et l'actionneur (31) sont accouplés au corps déformable (10) par une structure de levier (20).

3. Dispositif dynamométrique selon l'une des revendications précédentes,
**caractérisé en ce que**
l'actionneur (31), le capteur (30) et le dispositif de commande sont connectés entre eux de sorte que le dispositif de commande commande l'actionneur (31) au moyen d'un signal d'actionneur déterminé à partir du signal de capteur sur la base de tableaux calibrés et/ou de règles mathématiques.

4. Dispositif dynamométrique selon la revendication 3,
**caractérisé en ce que**
le signal de capteur est la grandeur de mesure représentative pour l'action de la force extérieure (13).

5. Dispositif dynamométrique selon l'une des revendications précédentes,
**caractérisé en ce que**
l'élément piézoélectrique de l'actionneur (31) et/ou du capteur (30) est formé de plusieurs couches.

6. Dispositif dynamométrique selon l'une des revendications précédentes,
**caractérisé en ce que**
le corps déformable est une barre pliante (10).

7. Dispositif dynamométrique selon l'une des revendications précédentes,
**caractérisé en ce que**
le corps déformable est en appui sur la base fixe par un groupe de composants passif (32) de construction identique au groupe de composants actif, disposé parallèlement à celui-ci, et ayant fonction de corps d'appui du corps déformable.
